Europäisches Patentamt

European Patent Office

Office européen des brevets

(19)

(11) Veröffentlichungsnummer : **0 017 041**
**B1**

(12) # EUROPÄISCHE PATENTSCHRIFT

(45) Veröffentlichungstag der Patentschrift :
23.12.81

(21) Anmeldenummer : 80101292.3

(22) Anmeldetag : 13.03.80

(51) Int. Cl.³ : **B 29 B   1/06**, B 29 B   5/04,
B 29 D 27/02

(54) Vorrichtung zum Herstellen eines massive oder zellförmige Stoffe bildenden Reaktionsgemisches aus fliessfähigen Reaktionskomponenten und Einbringen des Reaktionsgemisches in ein Formwerkzeug.

(30) Priorität : 23.03.79 DE 2911547

(43) Veröffentlichungstag der Anmeldung :
15.10.80 (Patentblatt 80/21)

(45) Bekanntmachung des Hinweises auf die Patenterteilung : 23.12.81 Patentblatt 81/51

(84) Benannte Vertragsstaaten :
DE FR GB IT

(56) Entgegenhaltungen :
DE - A - 2 132 381
DE - A - 2 817 687
US - A - 2 995 346
US - A - 3 056 661
US - A - 3 751 549

(73) Patentinhaber : BAYER AG
Zentralbereich Patente, Marken und Lizenzen
D-5090 Leverkusen 1, Bayerwerk (DE)

(72) Erfinder : Boden, Heinrich
Sperberweg 14
D-5090 Leverkusen 3 (DE)
Erfinder : Müller, Heinz
Buchenweg 16
D-5090 Leverkusen 1 (DE)
Erfinder : Sowade, Bernd
Drosselweg 38
D-5060 Berg.-Gladbach 2 (DE)

Vorrichtung zum Herstellen eines massive oder zellförmige Stoffe bildenden Reaktionsgemisches aus fließfähigen Reaktionskomponenten und Einbringen des Reaktionsgemisches in ein Formwerkzeug

Die Erfindung geht aus von einer Vorrichtung zum Herstellen eines massive oder zellförmige Stoffe bildenden Reaktionsgemisches aus fließfähigen Reaktionskomponenten und Einbringen des Reaktionsgemisches in ein Formwerkzeug, bestehend aus

a) Vorratsbehältern für Reaktionskomponenten, von denen

b) Zuleitungen über

c) Dosierpumpen zu einer

d) Vormischkammer führen, die in einem

e) Gehäuse angeordnet ist, und an deren Auslaßöffnung eine

f) Nachmischkammer anschließt, welche

g) aus einem Spalt besteht, der durch

h) zwei Leitteller gebildet ist, von denen der eine mit einem

i) Rotationsantrieb versehen ist.

Die mit derartigen Vorrichtungen erzeugten Reaktionsgemische dienen der Fabrikation von Formteilen in einem Formwerkzeug, ggf. auch der kontinuierlichen Herstellung von Sandwichbahnen. Die gebildeten Kunststoffe bestehen beispielsweise aus Polyurethan, das aus einem Polyol und einem Isocyanat gebildet ist, oder aus Kunststoffen auf Basis von ungesättigten Polyesterharzen, Epoxidharzen, Polyisocyanuratharzen, ε-Caprolactam:

Mischvorrichtungen für die Herstellung solcher Reaktionsgemische sind in Form von Rührwerksmischern wie auch in Form von Injektionsmischern bekannt.

Man verwendet Rührwerksmischer in großem Umfang bei Reaktionskomponenten mit geringer Reaktivität mit großen Viskositätsunterschieden und extremen Dosierverhältnissen. Die z.Z. bekannten Rührwerksmischer sind gekennzeichnet durch eine feststehende, die Mischkammeraußenkontur bildende Mantelhülse und einen innerhalb dieser Mantelhülse rotierend angeordneten Rührer. Die Abdichtung zwischen der Rührerwelle und der Mantelhülse muß über eine druckempfindliche Abdichtung erfolgen. Bei Auslegung des Rührers als Mischschnecke mit Pumpwirkung vom Einlaß der Komponenten zum Auslaß der Mischkammer hin kann zwar in Sonderfällen auf diese Abdichtung verzichtet werden durch den zwangsläufig vorhandenen Luftspalt wird jedoch bei zu geringer Dosiergeschwindigkeit der Komponenten unerwünschte Luft in die Reaktionsmischung eingesaugt, während bei zu hoher Dosiergeschwindigkeit Reaktionsgemisch in den Luftspalt eintritt, sich verfestigt und zu Störungen führt. Solche Vorrichtungen eignen sich nur für relativ niedrige Dosiergeschwindigkeiten. Sie sind für die Herstellung von absolut porenfreien Formteilen bei intermittierender Arbeitsweise zum Zwecke des Füllens von Formwerkzeugen immer dann problematisch, wenn die Mischkammer wegen hoher Reaktivität der in der Mischkammer befindlichen Reaktionsmischung zwischen zwei Formfüllvorgängen, d.h. zwischen zwei Mischvorgängen, geleert und gereinigt werden muß. Bei erneutem Mischbeginn, also bei Eintritt der Reaktionskomponenten in die mit Luft gefüllte Mischkammer, werden, insbesondere beim Einsatz von Stachelrührern, zwangsläufig kleine Luftblasen in das Reaktionsgemisch eingerührt.

Ein weiteres wesentliches Merkmal aller Rührwerksmischer ist die Reduzierung ihres Mischkammerquerschnittes zum Auslaßbereich hin, indem die Reaktionsmischung die Mischkammer über eine vorzugsweise runde Bohrung oder über ein Rohr verläßt. Allen Rührwerksmischern ist zusätzlich gemeinsam, daß die Mischintensität während eines Mischvorganges nur über die Änderung der Rührerdrehzahl bzw. der Dosiergeschwindigkeit beeinflußt werden kann, weil sich die Geometrie der Mischkammer während des Mischvorganges in den meisten Fällen nicht ändern läßt.

Zwangsgesteuerte und selbstreinigende Injektionsvermischer weisen in der Regel kein Rührwerk auf und haben deshalb keine Abdichtungs- oder Säuberungsprobleme. Sie sind für die Verarbeitung hochaktiver Mehrkomponenten-reaktionssysteme auch bei hohen Mischkammerdrücken und bei Ausflußgeschwindigkeiten bis ca. 600 l/min geeignet. Auch wenn solche Mischer mit statischen Nachmischern ausgestattet sind, hat sich gezeigt, daß bei großen Viskositätsunterschieden der Reaktionskomponenten, bei extremen Dosierverhältnissen, bei Systemen mit hohen Anteilen an Füllstoffen und bei geringer Affinität der Reaktionspartner zueinander eine ausreichende Mischwirkung zu Beginn oder Ende der Mischphase nicht in genügendem Maße gewährleistet ist.

Aus US-A-2 995 346 ist eine Vorrichtung der eingangs genannten Art bekannt, bei der die Nachmischkammer durch zwei spaltbildende Bauteile definiert ist, von denen eines mit einem Rotationsantrieb versehen ist. Das antreibbare Bauteil ist von einem Gehäuse vollständig umgeben. Dem Mischspalt ist lediglich ein gemeinsamer Zulauf für die bereits vorher zusammengeführten Reaktionskomponenten und ein durch eine Gehäusebohrung gebildeter Ablauf zugeordnet. Die Antriebswelle ist im Gehäuse gelagert und mit einer Abdichtung versehen. Sie durchquert den Mischspalt. Neben den allgemein bekannten Problemen mit solchen Wellendichtungen bei derartigen Vorrichtungen ist von besonderem Nachteil, daß sich nur ein relativ niedriger Mischkammerdruck einstellen läßt und daß sich die Mischkammer nur durch Spülung reinigen läßt. Deshalb verbietet sich der Einsatz dieser Vorrichtung für die Formverschäumung allein schon aus wirtschaftlichen Gründen.

Die zu lösende Aufgabe ist in der Bereitstellung einer Vorrichtung der eingangs genannten Art zu sehen, die frei von störanfälligen Dichtungen und auch unter höheren Mischkammerdrücken betreibbar ist, um die einwandfreie Vermischung problematischer Reaktionskomponenten, z.B. solcher mit großen Viskositätsunterschieden und/oder in extremen Dosierverhältnissen und/oder mit hohem Füllstoffgehalt und/oder geringer Affinität zueinander zu gewährleisten.

Die Lösung dieser Aufgabe besteht darin,

j) daß die Antriebswelle des Rotationsantriebes völlig außerhalb des Weges des Reaktionsgemisches gelegen ist und daß

k) die Leitteller von dem Formwerkzeug umgeben werden, in dessen Formhohlraum

l) der die Nachmischkammer bildende Spalt mündet.

Diese besondere Ausführungsform hat den Vorteil, daß keine Abdichtungen vorgesehen zu werden brauchen, weil die Achse des rotierenden Leittellers der mit dem Reaktionsgemisch in Berührung kommenden Oberfläche des Leittellers abgewandt ist. Da keine Abdichtungsprobleme auftreten können, sind auch höhere Mischkammerdrücke realisierbar. Das Reaktionsgemisch läßt sich unmittelbar aus der spaltartigen Nachmischkammer in ein diese umgebendes Formwerkzeug einleiten. Die Nachmischkammer läßt sich, insbesondere durch Ausnutzung der Zentrifugalkraft, leicht reinigen.

Vorzugsweise ist im Bereich des Zentrums des starren Leittellers die Vormischkammer angeordnet.

Dadurch wird ein direkter Übergang aus der Vormischkammer in die Nachmischkammer, d.h. in den Spalt, erzielt. Selbstverständlich kann die Vormischkammer auch weiter vor der Nachmischkammer liegen, wozu dann allerdings ein oder mehrere Verbindungskanäle erforderlich sind. In diesem Falle entstehen Schwierigkeiten wegen der Reinigung der Vormischkammer und der Verbindungskanäle. Im ersteten Fall hingegen lassen sich Vormischkammern mit den an sich bekannten Ausstoßkolben verwenden.

Mindestens einer der Leitteller ist gemäß einer besonderen Ausbildung der Vorrichtung axial verschiebbar. Durch diese Verschiebbarkeit läßt sich das Volumen der Nachmischkammer nicht nur von vornherein auf einen optimalen Wert für das jeweilige Reaktionsgemisch einstellen ; die Spaltweite läßt sich auch während des Mischvorganges variieren. Beispielsweise wird der Spalt anfangs auf Null oder nahezu Null gehalten, wird dann vergrößert und gegen Ende des Mischvorganges wieder verringert.

Mindestens einer der Leitteller ist vorzugsweise auf seiner zum Spalt weisenden Oberfläche mit Konturen versehen. Diese Konturen können mannigfaltiger Art sein und dienen bestimmten Zwecken, wie beispielsweise der Stauung oder Beschleunigung des Reaktionsgemisches, der Ausbildung von Strömungsfäden, die einander schneiden und dabei ohne zu starke Scherung ähnlich wie mit einer statischen Mischvorrichtung vermischt werden. Auf diese Weise ist es beispielsweise möglich, die Nachmischkammer in eine Quellzone, eine Stauzone, eine Förderzone und eine Friktionszone aufzuteilen. In der Quellzone wird durch geringe Spaltbreite eine Quellströmung mit Ausbildung einer Fließfront aufgebaut, wobei Lufteinschlag vermieden wird, so daß das Reaktionsgemisch absolut blasenfrei bleibt. Die Stauzone ist durch im Drehsinn des Leittellers ausgeführte Spiralnuten oder Staubalken mit Querschnittsreduzierung charakterisiert. Die Förderzone weist entgegen dem Drehsinn des Leittellers ausgeführte Spiralnuten auf. Die Friktionszone liegt im äußeren Bereich der Nachmischkammer, d.h. im Bereich des größeren Durchmessers und wird durch geringe Spaltdicke und/oder stachelige Oberfläche und die hohe Umfangsgeschwindigkeit des Leittellers bewirkt.

Vorzugsweise ist mindestens einer der Leitteller auf seiner zum Spalt weisenden Oberfläche mit austauschbaren Besatzstücken versehen.

Mittels dieser auf die Basisplatte aufschraubbaren Besatzstücke läßt sich die Oberfläche der Leitteller jeglichen Erfordernissen ohne große Schwierigkeiten anpassen. Diese Besatzstücke sind beispielsweise aufschraubbar oder festklemmbar. Je nach Art des Reaktionsgemisches lassen sich damit auch Besatzstücke aus verschiedenartigem Material entsprechend der Beanspruchung auflegen. So verwendet man beispielsweise bei Reaktionsgemischen mit abrasiven Füllstoffen Besatzstücke aus legiertem Stahl mit nitrierter Oberfläche. Für nicht-abrasive, jedoch stark klebende Reaktionsgemische eignet sich Aluminium mit Polytetrafluorethylen-Beschichtung. Bei geringer mechanischer Beanspruchung und geringer Zentrifugalbeschleunigung verwendet man beispielsweise Besatzstücke aus Polytetrafluorethylen, Polypropylen, Polyurethanharzen und Epoxidharzen, die dann kostenmäßig günstiger sind.

Der Winkel, unter dem sich die Nachmischkammer stetig oder unstetig, beispielsweise über kaskadenförmige Stufen, zwischen den Leittellern ausdehnt, liegt zwischen 0 und 90° zur Rotationsachse des mit einem Rotationsantrieb versehenen Leittellers. Eine kaskadenförmige Ausführung, gegebenenfalls kombiniert mit einer Änderung der Mischspaltdicke durch kontinuierliche oder stufenweise Veränderung des Abstandes der Leitteller zueinander, hat sich als besonders vorteilhaft erwiesen. Die wirksame Oberfläche der den Mischerspalt begrenzenden Leitteller kann durch eine solche Gestaltung oder auch gegebenenfalls durch Eintauchen von Erhebungen in Vertiefungen auf dem gegenüberliegenden Teller bei gleichem Leittellerdurchmesser erheblich vergrößert werden.

Nach einer Weiterbildung der Erfindung ist der mit einem Rotationsantrieb versehene Leitteller mit dem Formwerkzeug verbunden.

In diesem Falle rotiert das Formwerkzeug mit dem Leitteller.

Es kann aber auch vorteilhaft sein, für das Formwerkzeug einen separaten Antrieb vorzusehen, wobei dann das Formwerkzeug, jeweils den Erfordernissen entsprechend, sowohl in Ruhelage als auch mit einer gegenüber der des Leittellers anderen, vorzugsweise geringeren Drehzahl rotierend, mit Reaktionsgemisch gefüllt werden kann.

Sind beide Leitteller verschiebbar angeordnet, so besteht die Möglichkeit, die Leitteller innerhalb einer lichten Öffnung eines rotierenden Formwerkzeuges synchron, also bei konstanter Dicke des Mischkammerspaltes, axial so zu verschieben, daß eine gleichmäßige Verteilung des Reaktionsgemisches innerhalb des zur Rotationsachse hin offenen Formhohlraum eines rotierenden Formwerkzeuges oder eine definierte Masseverteilung in axialer Richtung möglich wird.

Im Normalfalle sind die Leitteller rotationssymmetrisch angeordnet. In Sonderfällen kann jedoch eine leichte Parallelverschiebung der Symmetrieachse bzw. eine Winkeländerung zwischen den Symmetrieachsen der Leitteller auf ≤ 180° beispielsweise zur Erzeugung von über den Umfang der Nachmischkammer unterschiedlicher Rotationsgeschwindigkeit des Reaktionsgemisches sinnvoll sein, beispielsweise zum Füllen von Formwerkzeughohlräumen mit unterschiedlichem Volumen.

Die Vorrichtung ist sowohl in horizontaler als auch in vertikaler Lage sowie in allen Zwischenlagen einsetzbar.

Zum Ende des Mischvorganges lassen sich die Leitteller einander axial so stark annähern, daß das noch zwischen ihnen befindliche Reaktionsgemisch verdrängt und zentrifugal so beschleunigt wird, daß der Nachmischspalt sich selbsttätig säubert. Der Säuberungseffekt kann gegebenenfalls noch durch eine während der Reinigungszeit durchgeführte Erhöhung der Drehzahl des rotierenden Leittellers verstärkt werden. Anschließend oder bei der Öffnung des Formwerkzeuges zum Zwecke der Entformung können die beiden Leitteller automatisch axial soweit auseinandergefahren und gegebenenfalls geschwenkt werden, daß sie optisch überprüfbar bzw. mit Trennmittel einsprühbar sind.

Nach einer weiteren besonderen Ausführungsform weist die Vormischkammer mindestens zwei Auslaßkanäle auf, die außerhalb des Zentrums in die Nachmischkammer münden.

Dadurch wird infolge des rotierenden Leittellers ein überschichtender Auftrag des Vorgemisches auf die Oberfläche des Leittellers bewirkt, wobei die Schicht umso dünner wird, je schneller der Leitteller rotiert. Durch diese Maßnahme wird eine besonders gute Nachvermischung bei relativ geringer Turbulenz erzielt.

In einer Zeichnung ist die erfindungsgemäße Vorrichtung in mehreren Ausführungsbeispielen rein schematisch im Schnitt dargestellt und nachstehend näher erläutert.

Es zeigen :

Fig. 1 eine Vorrichtung, deren in Rotation versetzbarer Leitteller mit einem Formwerkzeug fest verbunden ist,

Fig. 2 eine Vorrichtung, die separate Rotationsantriebe für einen der Leitteller und ein Formwerkzeug aufweist,

Fig. 3 eine Vorrichtung mit ruhendem Formwerkzeug,

Fig. 4 bis 15 verschiedene Ausführungsformen der Leitteller bzw. deren Anordnung zueinander und

Fig. 16 und 17 Variationen der Komponentenzuführung.

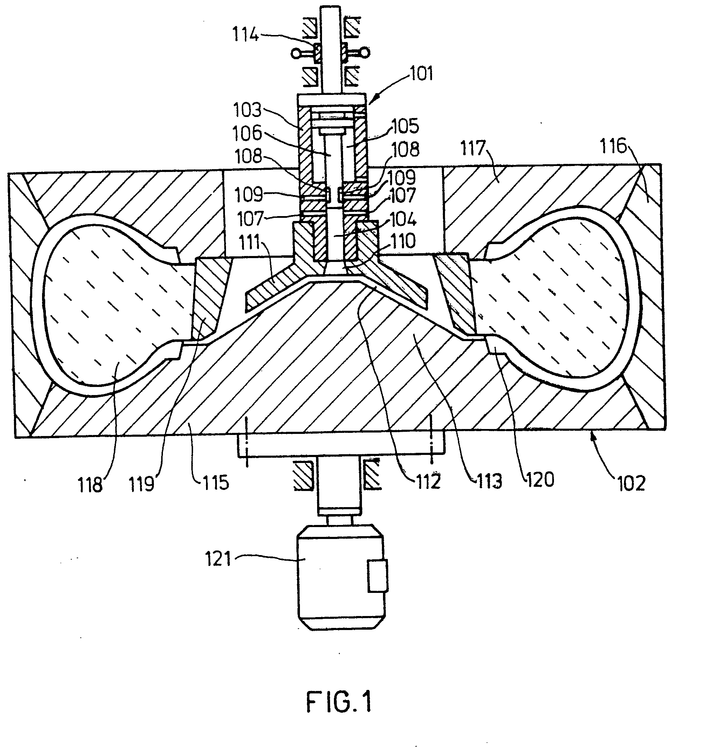

In Fig. 1 ist die Mischvorrichtung 101 mit einem Formwerkzeug 102 kombiniert. Die Mischvorrichtung 101 umfaßt ein Gehäuse 103, in dem eine Vormischkammer 104 angeordnet ist. Im Gehäuse 103 ist außerdem ein mittels einer Hydraulik 105 verschiebbarer Ausstoß- und Steuerkolben 106 geführt. Die Komponenten gelangen aus nicht dargestellten Vorratsbehältern über Dosierpumpen und Zuleitungen zu den Einlaßkanälen 107 und in Misch- stellung dann in die Vormischkammer 104. Steht der Ausstoß- und Steuerkolben 106 in Ausstoßstellung, so strömen die Komponenten aus den Einlaßkanälen 107 über die Rezirkulationsnuten 108 und die Rezirkulationskanäle 109 über nicht dargestellte Rückleitungen wieder in die Vorratsbehälter. Die Auslaßöffnung 110 der Vormischkammer 104 ist von einem Leitteller 111 umgeben und bildet gleichzeitig die Einlaßöffnung für eine Nachmischkammer 112, die als Spalt zwischen dem Leitteller 111 und einem weiteren Leitteller 113 ausgebildet ist. Das Gehäuse 103 ist samt Leitteller 111 mittels eines Handrades 114 zur Einstellung des die Nachmischkammer 112 bildenden Spaltes axial verschiebbar. Der Leitteller 113 ist mit dem Formwerkzeugteil 115 aus einem Stück gefertigt. Dieses bildet zusammen mit den Formwerkzeugteilen 116, 117 und dem Kern 118 mit Kernring 119, den Formhohlraum 120 für einen Fahrzeugreifen. Am Formwerkzeugteil 115 ist ein Rotationsantrieb 121 vorgesehen, und zwar koaxial zur Mittelachse der Vormischkammer 104.

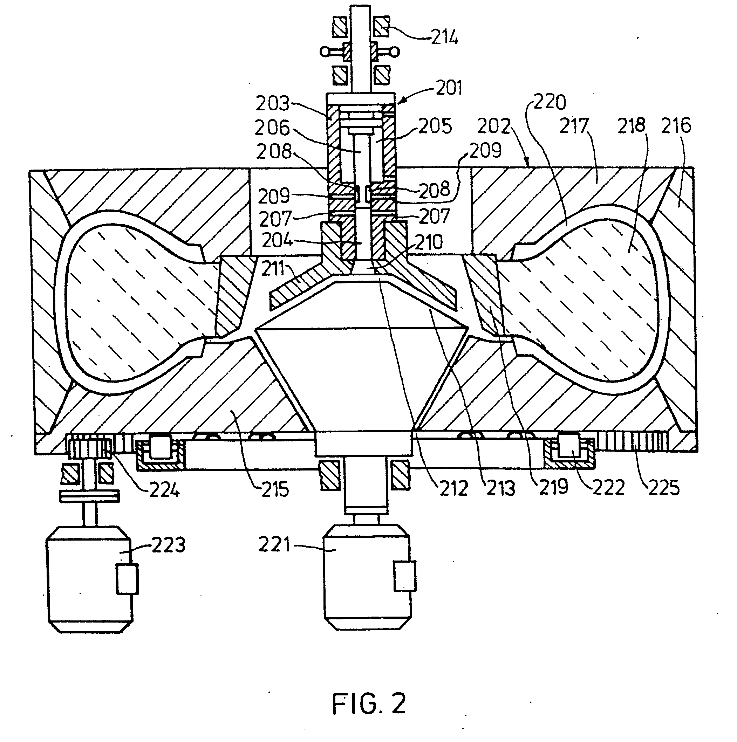

In Fig. 2 ist die Mischvorrichtung 201 mit einem Formwerkzeug 202 kombiniert. Die Mischvorrichtung 201 umfaßt ein Gehäuse 203, in dem eine Vormischkammer 204 angeordnet ist. Im Gehäuse 203 ist außerdem ein mittels einer Hydraulik 205 verschiebbarer Ausstoß- und Steuerkolben 206 geführt. Die Komponenten gelangen aus nicht dargestellten Vorratsbehältern über Dosierpumpen und Zuleitungen zu den Einlaßkanälen 207 und in Arbeitsstellung dann in die Vormischkammer 204. Steht der Ausstoß- und Steuerkolben 206 in Ausstoßstellung, so strömen die Komponenten aus den Einlaßkanälen 207 über Rezirkulationsnuten 208 und Rezirkulationskanäle 209 über nicht dargestellte Rückleitungen wieder in die Vorratsbehälter. Die Auslaßöffnung 210 der Vormischkammer 204 ist von einem Leitteller 211 umgeben und bildet gleichzeitig die im Zentrum liegende Einlaßöffnung für eine Nachmischkammer 212, die als Spalt zwischen dem Leitteller 211 und einem weiteren Leitteller 213 ausgebildet ist. Das Gehäuse 203 samt Leitteller 211 ist mittels eines Handrades 214 zur Einstellung des die Nachmischkammer 212 bildenden Spaltes axial verschiebbar. Der Leitteller 213 ist mit einem Rotationsantrieb 221 versehen. Das Formewerkzeug 202 ist aus den Formwerkzeugteilen 215, 216, 217 und dem Kern 218 mit Kernring 219 aufgebaut. Diese Teile umschließen einen Formhohlraum 220 für die Herstellung eines Fahrzeugreifens. Das Formwerkzeugteil 215 ist auf einem Rollenkranz 222 gelagert und weist einen eigenen Rotationsantrieb 223 auf, dessen Ritzel 224 in einen Zahnkranz 225 des Formwerkzeugteils 215 eingreift.

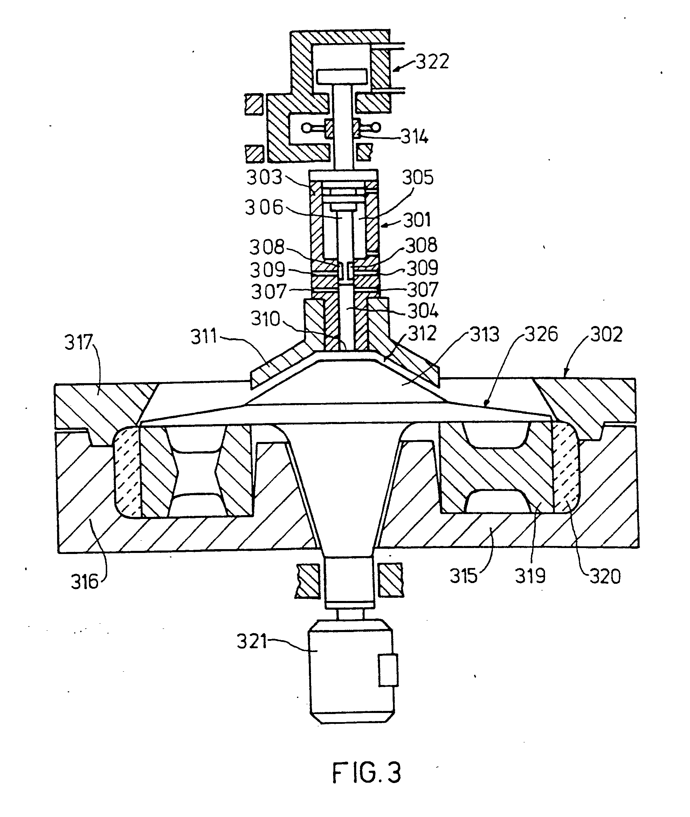

In Fig. 3 ist die Mischvorrichtung 301 ebenfalls mit einem Formwerkzeug 302 kombiniert. Die Mischvorrichtung 301 umfaßt ein Gehäuse 303, in dem eine Vormischkammer 304 angeordnet ist. Im Gehäuse 303 ist außerdem ein mittels einer Hydraulik 305 verschiebbarer Ausstoß- und Steuerkolben 306 geführt. Die Komponenten gelangen aus nicht dargestellten Vorratsbehältern über Dosierpumpen und Zuleitungen zu den Einlaßkanälen 307 und in Arbeitsstellung dann in die Vormischkammer 304. Steht der Ausstoß- und Steuerkolben 306 in Ausstoßstellung, so strömen die Komponenten aus den Einlaßkanälen 307 über Rezirkulationsnuten 308 und Rezirkulationskanäle 309 über nicht dargestellte Rückleitungen wieder in die Vorratsbehälter. Die Auslaßöffnung 310 der Vormischkammer 304 ist von einem Leitteller 311 umgeben und bildet gleichzeitig die im Zentrum liegende Einlaßöffnung für eine Nachmischkammer 312, die als Spalt zwischen dem Leitteller 311 und einem weiteren Leitteller 313 gebildet ist. Das Gehäuse 303 ist samt Leitteller 311 mit einer hydraulisch oder pneumatisch betätigbaren axialen Verstellvorrichtung 322 verbunden, womit während des Mischvorganges der Druck in dem die Nachmischkammer 312 bildenden Mischspalt einstellbar ist. Der Leitteller 313 ist mit einem Rotationantrieb 321 verbunden. Das Formwerkzeug 303 ist aus den Formwerkzeugteilen 315, 316, 317 und dem Kernring 319 aufgebaut.

Diese Teile umschließen einen Formhohlraum 320 für die Herstellung einer Reifenlauffläche. Das Formwerkzeug 302 ist starr angeordnet, rotiert also nicht. Das Reaktionsgemisch gelangt aus der Nachmischkammer 312 über eine freie Gleitfläche 326, die mit dem Leitteller 313 fest verbunden ist, in den Formhohlraum 320.

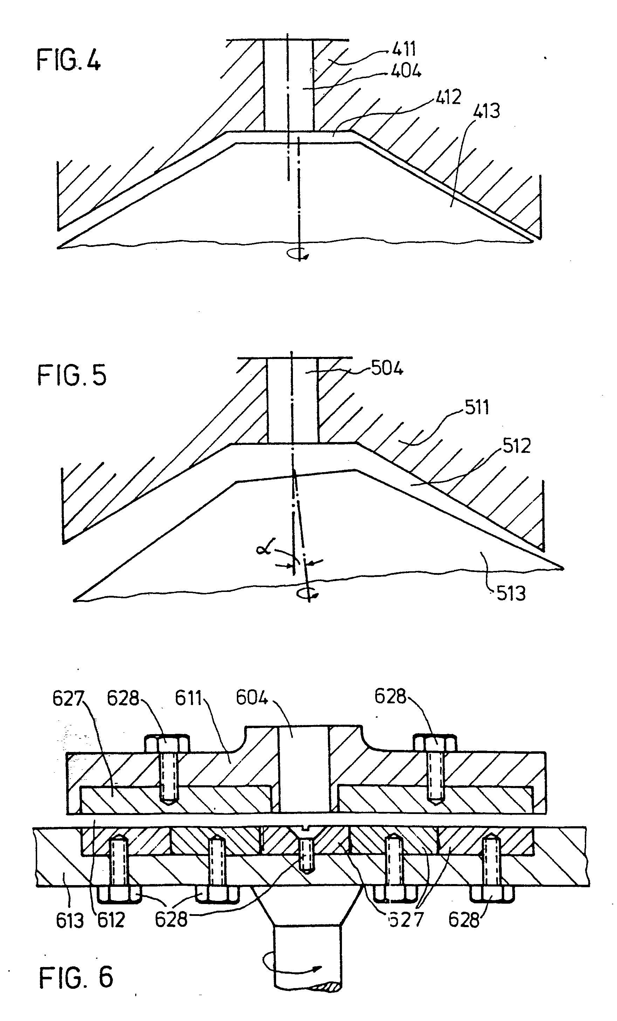

In Fig. 4 sind die Achsen des starren Leittellers 411 und des antreibbaren Leittellers 413 zueinander parallel verschoben. Die Vormischkammer 404 liegt im Zentrum des Leittellers 411. Die Nachmischkammer 412 hat, über den Umfang gesehen, unterschiedliche Spaltbreite.

In Fig. 5 stehen die Achsen des starren Leittellers 511 und des rotationsfähigen Leittellers 513 unter einem Winkel $\alpha$ von 5° zueinander. Die Vormischkammer 504 liegt im Zentrum des Leittellers 511. Die Nachmischkammer 512 hat, über den Umfang und auch in radialer Richtung gesehen, unterschiedliche Spaltweite.

In Fig. 6 ist die Nachmischkammer 612 sich

senkrecht zur Achse der Leitteller 611, 613 erstreckend ausgebildet. Der Leitteller 611 weist ein ringartiges Besatzstück 627 aus Hartmetall auf, das mit Schrauben 628 austauschbar befestigt ist. Auch der Leitteller 613 ist mit scheibenartigen bzw. aus konzentrischen Ringen bestehenden, mittels Schrauben 628 auswechselbar befestigten Besatzstücken 627 aus Hartmetall belegt, so daß die Nachmischkammer 612 durch verschleißfeste Oberflächen begrenzt ist.

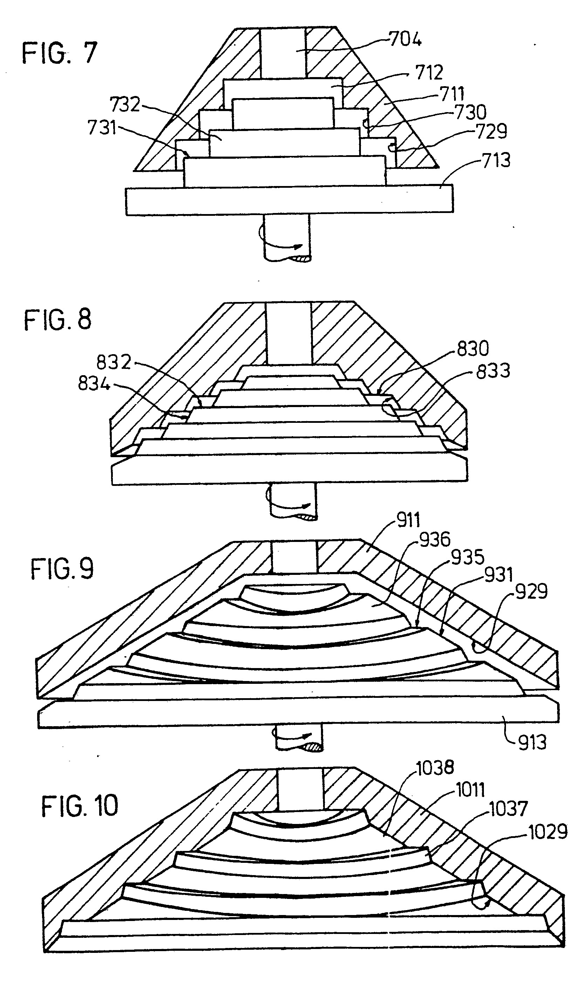

In Fig. 7 weist die Oberfläche 729 des starren Leittellers 711 kaskadenartige, negative Konturen 730 auf.

Die Vormischkammer ist mit 704 bezeichnet. Der rotationsfähige Leitteller 713 ist auf seiner Oberfläche 731 ebenfalls mit kaskadenartigen, jedoch positiven Konturen 732 versehen, so daß die Nachmischkammer 712, im Querschnitt gesehen, stufenförmig verläuft.

In Fig. 8 sind die Flanken 833, 834 der Konturen 830, 832 abgeschrägt.

In Fig. 9 ist der starre Leitteller 911 mit einer glatten Oberfläche 929 versehen, während der rotationsfähige Leitteller 913 auf seiner Oberfläche 931 ringartige Ausnehmungen 935 aufweist, die, über den Umfang gesehen, unterschiedliches Niveau besitzen und zwischen denen Staubalken 936 ausgebildet sind.

In Fig. 10 ist lediglich der starre Leitteller 1 011 gezeigt. Seine Oberfläche 1 029 bildet das Gegenstück zur Oberfläche 931 des rotationsfähigen Leittellers 913 gemäß Fig. 9. Auch hier sind Ausnehmungen 1 037 vorgesehen, die mit Staubalken 1 038 abwechseln.

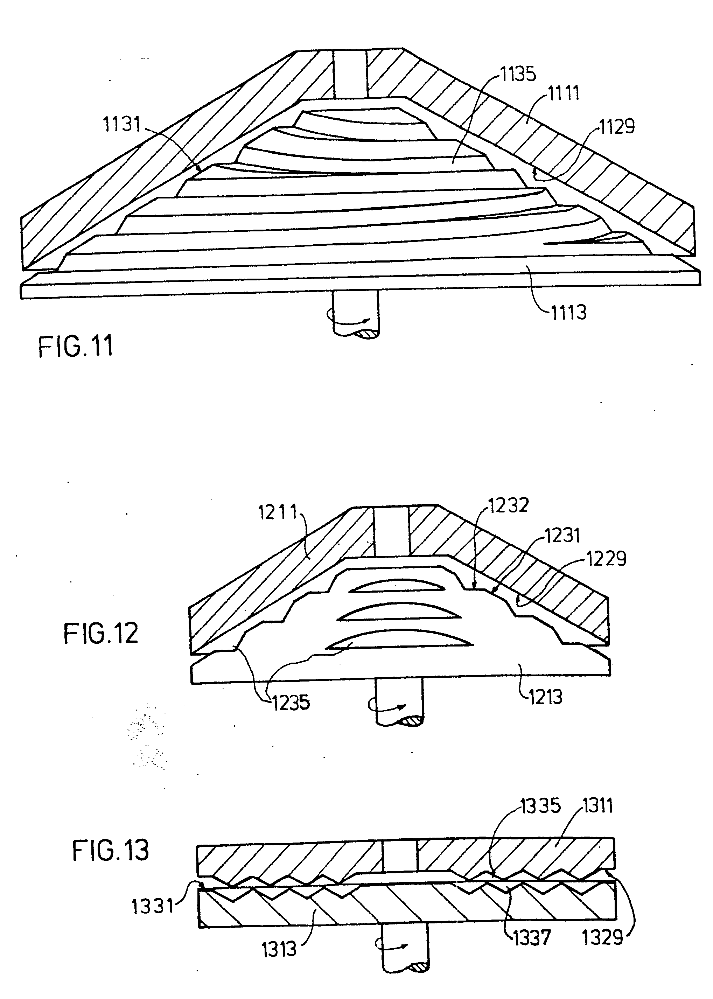

In Fig. 11 ist der starre Leitteller 1 111 mit einer glatten Oberfläche 1 129 ausgestattet, während die Oberfläche 1 131 des rotationsfähigen Leittellers 1 113 eine spiralartige Ausnehmung 1 135 zeigt.

In Fig. 12 ist die Oberfläche 1 229 des starren Leittellers 1 211 ebenfalls glatt ausgebildet. Die Oberfläche 1 231 des rotationsfähigen Leittellers 1 213 weist auf verschiedenem Niveau als Kontur 1 232 mehrere um 90° versetzte Ausnehmungen 1 235 auf.

In Fig. 13 weisen sowohl die Oberfläche 1 329 des starren Leittellers 1 311 als auch die Oberfläche 1331 des rotationsfähigen Leittellers 1 313 konzentrische rillenartige Ausnehmungen 1 335 bzw. 1 337 auf.

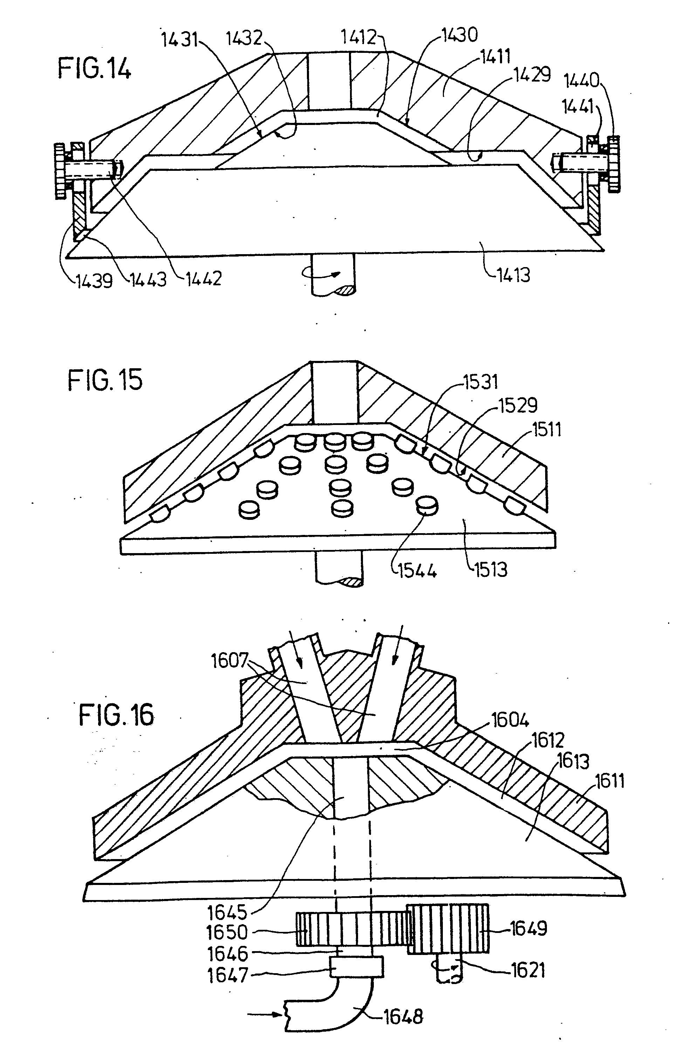

In Fig. 14 besitzt die Oberfläche 1 429 des starren Leittellers 1 411 eine kegelförmig abgestufte Kontur 1 430. Der rotationsfähige Leitteller 1 413 zeigt auf seiner Oberfläche 1 431 eine entsprechende Kontur 1 432. Am Umfang des starren Leittellers 1 411 ist ein in Achsrichtung verstellbarer Ring 1 439 mittels Rändelschrauben 1 440, die durch Langlöcher 1 441 des Ringes 1 439 geführt sind und in Gewindelöcher 1 442 des Leittellers 1 411 eingreifen, festklemmbar. Mit diesem Ring 1 439 läßt sich die Weite des Austrittsspaltes 1 443 der Nachmischkammer 1 412 im Bezug auf die Oberfläche 1 431 des Leittellers 1 413 einstellen.

In Fig. 15 ist die Oberfläche 1 529 des starren Leittellers 1 511 glatt ausgebildet. Die Oberfläche 1 531 des antreibbaren Leittellers 1 513 hingegen ist mit Köpfen 1 544 versehen.

In Fig. 16 befindet sich die Vormischkammer 1 604 genau in der Mittelachse im Zentrum zwischen den beiden Leittellern 1 611, 1 613 und geht direkt in die Nachmischkammer 1 612 über. Die Zuführung der Komponenten geschieht hier über die Kanäle 1 607. Ein weiterer Kanal 1 645 für Füllstoff liegt in der Mittelachse des rotationsfähigen Leittellers 1 613. Der Zulaufstutzen 1 646 des Kanals 1 645 ist in einer Gleitdichtung 1 647 gelagert, in die eine Zuführleitung 1 648 mündet. Der Rotationsantrieb 1 621 erfolgt über ein Ritzel 1 649, das in ein auf dem Zulaufstutzen 1 646 befestigtes Zahnrad 1 650 eingreift.

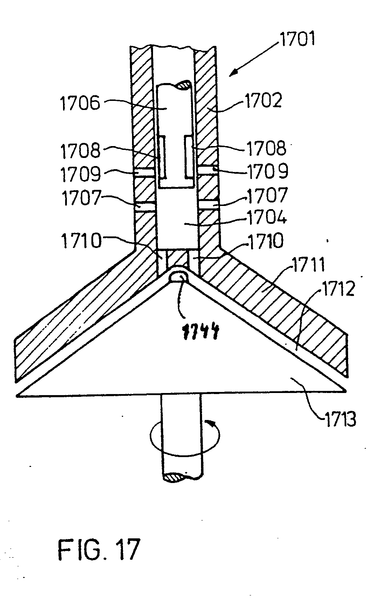

In Fig. 17 weist die Mischvorrichtung 1 701 ein Gehäuse 1 702 auf, in dem eine Vormischkammer 1 704 angeordnet ist. Darin ist ein verschiebbarer Ausstoß- und Steuerkolben 1 706 geführt. Die Komponenten gelangen in Mischstellung des Kolbens 1 706 über die Einlaßkanäle 1 707 in die Vormischkammer 1 704. In Ausstoßstellung des Kolbens 1 706 strömen die Komponenten aus den Einlaßkanälen 1 707 über die Rezirkulationsnuten 1 708 und- kanäle 1 709 wieder zurück. Die Vormischkammer 1 704 weist zwei als Auslaßkanäle 1 710 ausgebildete Auslaßöffnungen auf, die außerhalb der gemeinsamen Mittelachse der Leitteller 1 711, 1 713 in die Nachmischkammer 1 712 münden. Der Leitteller 1 713 ist im Zentrum mit einem Kopf 1 744 versehen, der die beiden aus den Auslaßkanälen 1 710 zufließenden Ströme des Vorgemisches zunächst voneinander trennt.

Es versteht sich, daß hier nur ein kurzer Einblick in die Mannigfaltigkeit der möglichen Ausführungsformen gegeben werden konnte und daß es dem Fachmann aufgrund dieser Offenbarung keinerlei Schwierigkeiten verursacht, für spezielle Probleme abgewandelte, im Rahmen des Erfindungsgedankens liegende Lösungen auszuwählen. Dies betrifft auch die Ausführungsform der als Vormischer verwendeten Injektions-Anbaumischer, die in vielfältiger Form auf dem Markt anzutreffen sind, hier jedoch nur in einer Ausführungsform skizziert wurden.

## Ansprüche

1. Vorrichtung zum Herstellen eines massive oder zellförmige Stoffe bildenden Reaktionsgemisches aus fließfähigen Reaktionskomponenten und Einbringen des Reaktionsgemisches in ein Formwerkzeug, bestehend aus

   a) Vorratsbehältern für Reaktionskomponenten, von denen

   b) Zuleitungen über

   c) Dosierpumpen zu einer

   d) Vormischkammer (104 ; 204 ; 304 ; 404 ; 504 ; 604 ; 704 ; 1 604 ; 1 704) führen, die in einem

   e) Gehäuse (103 ; 203 ; 303 ; 1 702) angeordnet ist, und an deren Auslaßöffnung (110 ; 210 ; 310 ; 1 710) eine

   f) Nachmischkammer (112 ; 212 ; 312 ; 412 ; 512 ; 612 ; 712 ; 1 412 ; 1 612 ; 1 712) anschließt, welche

   g) aus einem Spalt besteht, der durch

   h) zwei Leitteller (111, 113 ; 211, 213 ; 311, 313 ; 411, 413 ; 511, 513 ; 611, 613 ; 711, 713 ; 911, 913 ; 1 011 ; 1 111, 1 113 ; 1 211, 1 213 ; 1 311, 1 313 ; 1 411, 1 413 ; 1 511, 1 513 ; 1 611,1 613 ; 1 711, 1 713) gebildet ist, von denen der eine (113 ; 213 ; 313 ; 1 613) mit einem

   i) Rotationsantrieb (121 ; 221 ; 321 ; 1 621) versehen ist, dadurch gekennzeichnet,

   j) daß die Antriebswelle des Rotationsantriebes (121 ; 221 ; 321 ; 1 621) völlig außerhalb des Weges des Reaktionsgemisches gelegen ist und daß

   k) die Leitteller (111, 113 ; 211, 213 ; 311, 313 ; 411, 413 ; 511, 513 ; 611, 613 ; 711, 713 ; 911, 913 ; 1 011 ; 1 111, 1 113 ; 1 211, 1 213 ; 1 311, 1 313 ; 1 411, 1 413 ; 1 511, 1 513 ; 1 611, 1 613 ; 1 711, 1 713) von dem Formwerkzeug (102 ; 202 ; 302) umgeben sind, in dessen Formhohlraum (120 ; 220 ; 320)

   l) der die Nachmischkammer (112 ; 212 ; 312 ; 412 ; 512 ; 612 ; 712 ; 1 412 ; 1 612 ; 1 712) bildende Spalt mündet.

2. Vorrichtung nach Anspruch 1, dadurch gekennzeichnet, daß im Bereich des Zentrums des starren Leittellers (1 611) die Vormischkammer (1 604) angeordnet ist.

3. Vorrichtung nach Anspruch 1 oder 2, dadurch gekennzeichnet, daß mindestens einer der Leitteller (111 ; 211 ; 311) axial verschiebbar ist.

4. Vorrichtung nach einem der Ansprüche 1 bis 3, dadurch gekennzeichnet, daß mindestens einer der Leitteller (711, 713 ; 913 ; 1 011 ; 1 113 ; 1 213 ; 1 311 ; 1 313 ; 1 411, 1 413 ; 1 513) auf seiner zum Spalt weisenden Oberfläche (729, 731 ; 931 ; 1 029 : 1 131 ; 1 231 ; 1 329, 1 331 ; 1 429 ; 1 431 ; 1 531) mit Konturen (730, 732 ; 830, 832 ; 935 ; 1 037, 1 038 ; 1 135, 1 232 ; 1 335, 1 337 ; 1 430, 1 432 ; 1 544) versehen ist.

5. Vorrichtung nach einem der Ansprüche 1 bis 4, dadurch gekennzeichnet, daß mindestens einer der Leitteller (611, 613) auf seiner zum Spalt weisenden Oberfläche mit austauschbaren Besatzstücken (627) versehen ist.

6. Vorrichtung nach einem der Ansprüche 1 bis 5, dadurch gekennzeichnet, daß der mit einem Rotationsantrieb (121) versehene Leitteller (113) mit dem Formwerkzeug (102) verbunden ist.

7. Vorrichtung nach einem der Ansprüche 1 bis 6, dadurch gekennzeichnet, daß die Vormischkammer (1 704) mindestens zwei Auslaßkanäle (1 710) aufweist, die außerhalb des Zentrums in die Nachmischkammer (1 712) münden.

## Claims

1. An apparatus for producing a reaction mixture for forming solid or cellular materials from flowable reactants and for introducing the reaction mixture into a mould, comprising

    a) storage containers for reactants, from which

    b) feed pipes lead via

    c) metering pumps to a

    d) pre-mixing chamber (104 ; 204 ; 304 ; 404 ; 504 ; 604 ; 704 ; 1 604 ; 1 704) which is arranged in a

    e) housing (103 ; 203 ; 303 ; 1 702) and on whose outlet opening (110 ; 201 ; 310 ; 1 710) an

    f) after-mixing chamber (112 ; 212 ; 312 ; 412 ; 512 ; 612 ; 712 ; 1 412 ; 1 612 ; 1 712) is connected which

    g) comprises a slit which is formed by

    h) two baffle plates (111, 113 ; 211, 213 ; 311, 313 ; 411, 413 ; 511, 513 ; 611, 613 ; 711, 713 ; 911, 913 ; 1 011 ; 1 111, 1 113 ; 1 211, 1 213 ; 1 311, 1 313 ; 1 411, 1 413 ; 1 511, 1 513 ; 1 611, 1 613 ; 1 711, 1 713) one of which (113 ; 213 ; 313 ; 1 613) is provided with a

    i) rotary drive (121 ; 221 ; 321 ; 1 621), characterised in that

    j) the driving shaft of the rotary drive (121 ; 221 ; 321 ; 1 621) is situated completely outside the path of the reaction mixture and in that

    k) the baffle plates (111, 113 ; 211, 213 ; 311, 313 ; 411, 413 ; 511, 513 ; 611, 613 ; 711, 713 ; 911, 913 ; 1 011 ; 1 111, 1 113 ; 1 211, 1 213 ; 1 311, 1 313 ; 1 411, 1 413 ; 1 511, 1 513 ; 1 611, 1 613 ; 1 711, 1 713) are surrounded by the mould (102 ; 202 ; 302) into whose mould cavity (120 ; 220 ; 320)

    l) the slit forming the after-mixing chamber (112 ; 212 ; 312 ; 412 ; 512 ; 612 ; 712 ; 1 412 ; 1 612 ; 1 712) merges.

2. An apparatus according to claim 1, characterised in that the pre-mixing chamber (1 604) is arranged in the centre region of the rigid baffle plate (1 611).

3. An apparatus according to claims 1 or 2, characterised in that at least one of the baffle plates (111 ; 211 ; 311) is axially movable.

4. An apparatus according to one of claims 1 to 3, characterised in that at least one of the baffle plates (711, 713 ; 913 ; 1 011 ; 1 113 ; 1 213 ; 1311, 1313 ; 1411, 1413 ; 1513) is provided with contours (730, 732 ; 830, 832 ; 935 ; 1 037, 1 038 ; 1 135, 1 232 ; 1 335, 1 337 ; 1 430, 1 432 ; 1 544) on its surface pointing towards the slit (729, 731 ; 931 ; 1 029 ; 1 131 ; 1 231 ; 1 329, 1 331 ; 1 429, 1 431 ; 1 531).

5. An apparatus according to one of claims 1 to 4, characterised in that at least one of the baffle plates (611, 613) is provided on its surface pointing towards the slit with exchangeable edging members (627).

6. An apparatus according to one of claims 1 to 5, characterised in that the baffle plate (113) provided with a rotary drive (121) is connected to the mould (102).

7. An apparatus according to one of claims 1 to 6, characterised in that the pre-mixing chamber (1 704) has at least two outlet channels (1 710) which merge into the after-mixing (1 712) outside the centre.

**Revendications**

1. Dispositif pour préparer un mélange réactionnel formant des matières massives ou alvéolaires à partir de composants fluides et introduire le mélange réactionnel dans un moule, dispositif composé de :

    a) récipients de réserve pour les composants réactionnels d'où

    b) des conduites conduisent par l'intermédiaire de

    c) pompes doseuses à une

    d) chambre de prémélange (104 ; 204 ; 304 ; 404 ; 504 ; 604 ; 704 ; 1 604 ; 1 704) qui est agencée dans un

    e) corps (103 ; 203 ; 303 ; 1 702) et à l'ouverture de sortie (110 ; 210 ; 1 710) de laquelle se raccorde une

    f) chambre de post-mélange (112 ; 212 ; 312 ; 412 ; 512 ; 612 ; 712 ; 1 412 ; 1 612 ; 1 712) constituée par

    g) une fente qui est formée par

    h) deux plateaux déflecteurs (111, 113 ; 211, 213 ; 311, 313 ; 411, 413 ; 511, 513 ; 611, 613 ; 711, 713 ; 911, 913 ; 1 011 ; 1 111, 1 113 ; 1 211, 1 213 ; 1 311, 1 313 ; 1 411, 1 413 ; 1 511, 1 513 ; 1 611, 1 613 ; 1 711, 1 713) dont l'un (113 ; 213 ; 313 ; 1 613) est muni d'un

    i) dispositif d'entraînement en rotation (121 ; 221 ; 321 ; 1 621), caractérisé en ce que

    j) l'arbre d'entraînement du dispositif d'entraînement en rotation (121 ; 221 ; 321 ; 1 621) est placé entièrement en dehors du trajet du mélange réactionnel, et en ce que

    k) les plateaux déflecteurs (111, 113 ; 211, 213 ; 311, 313 ; 411, 413 ; 511, 513 ; 611, 613 ; 711, 713 ; 911, 1 011 ; 1 111, 1 113 ; 1 211, 1 213 ; 1 311, 1 313 ; 1 411, 1 413 ; 1 511, 1 513 ; 1 611, 1 613 ; 1 711, 1 713) sont entourés du moule (102 ; 202 ; 302) dans la cavité de moulage (120 ; 220 ; 320) duquel débouche

    l) la fente formant la chambre de post-mélange (112 ; 212 ; 312 ; 412 ; 512 ; 612 ; 712 ; 1 412 ; 1 612 ; 1 712).

2. Dispositif suivant la revendication 1, caractérisé en ce que la chambre de prémélange (1 604) est agencée dans la région du centre du plateau déflecteur fixe (1 611).

3. Dispositif suivant la revendication 1 ou 2, caractérisé en ce qu'au moins l'un des plateaux déflecteurs (111 ; 211 ; 311) peut être déplacé en translation axiale.

4. Dispositif suivant l'une des revendications 1 à 3, caractérisé en ce qu'au moins l'un des plateaux déflecteurs (711, 713 ; 911, 913 ; 1 011, 1 113 ; 1 213, 1 311 ; 1 313 ; 1 411 ; 1 413 ; 1 513) est muni sur sa surface qui regarde vers la fente (729, 731 ; 931 ; 1 029 ; 1 131 ; 1 231 ; 1 329 ; 1 331 ; 1 429, 1 431 ; 1 531) de profils (730, 732 ; 830, 832 ; 935 ; 1 037, 1 038 ; 1 135, 1 232 ; 1 335, 1 337 ; 1 430, 1 432 ; 1 544).

5. Dispositif suivant l'une des revendications 1 à 4, caractérisé en ce qu'au moins l'un des plateaux déflecteurs (611, 613) est muni d'éléments de garnissage interchangeables (627) sur sa surface qui regarde vers la fente.

6. Dispositif suivant l'une des revendications 1 à 5, caractérisé en ce que le plateau déflecteur (113) muni d'un dispositif d'entraînement en rotation (121) est relié au moule (102).

7. Dispositif suivant l'une des revendications 1 à 6, caractérisé en ce que la chambre de prémélange (1 704) comprend au moins deux canaux de sortie (1 710) qui débouchent dans la chambre de post-mélange (1 712) en dehors du centre.

FIG.1

FIG. 2

FIG. 3

FIG. 4

411
404
412
413

FIG. 5

504
511
512

α

513

627 628 611 604 628

613 612 628 627 628

FIG. 6

4

**FIG. 7**

704
712
711
730
729
713
732
731

**FIG. 8**

832
834
830
833

**FIG. 9**

911
936
935
931
929
913

**FIG. 10**

1038
1011
1037
1029

FIG.11

FIG.12

FIG.13

FIG.14

1431  1432      1412      1430
                                1411
                                  1429   1440
                                           1441

1439  1443  1442            1413

FIG.15

                              1531
                                1529
                                  1511

                    1544   1513

FIG.16

1607

        1604
          1612
          1613
            1611

1645
1650                    1649
1646
1647                    1621

        1648

7

FIG. 17